# EUROPÄISCHE PATENTANMELDUNG

(11) **EP 4 239 135 A1**
(43) Veröffentlichungstag der Anmeldung: **06.09.2023**
(21) Anmeldenummer: 23158981.3
(22) Anmeldetag: 28.02.2023
(51) Int. Cl.: E03F 3/06, F16L 55/179, F16L 55/26

(54) **SYSTEM ZUM SANIEREN VON SCHADHAFTEN LEITUNGSWANDUNGEN IM BEREICH DES ANSCHLUSSES EINER NEBENLEITUNG AN EINE HAUPTLEITUNG**

(30) Priorität: 01.03.2022 DE 102022104819
(71) Anmelder: Pipetronics GmbH & Co. KG, 76297 Stutensee (DE)
(72) Erfinder: Lämmerhirt, Markus, 76297 Stutensee (DE)
(74) Vertreter: Dr. Langfinger & Partner

(57) **Zusammenfassung**

Die vorliegende Erfindung betrifft eine Vorrichtung (1) zum Sanieren von schadhaften Leitungswandungen im Bereich des Anschlusses einer Nebenleitung an eine Hauptleitung, umfassend ein fahrbares Trägerelement (9) und eine selbstarretierende Schalung (3), wobei die selbstarretierende Schalung eine Kontaktplatte und das fahrbare Trägerelement einen Ausleger (11) mit einem Elektromagneten umfasst, und in einem Transportzustand die selbstarretierende Schalung mit dem Ausleger des Trägerelements verbunden ist, wobei das magnetische Feld der Elektromagneten auf die Kontaktplatten wirkt, und in einem Montagezustand die selbstarretierende Schalung im Bereich des Anschlusses einer Nebenleitung an eine Hauptleitung angebracht ist, wobei das magnetische Feld der Elektromagneten auf die Kontaktplatten nicht wirkt.

## Beschreibung

Die vorliegende Erfindung betrifft eine Vorrichtung zum Sanieren von schadhaften Leitungswandungen im Bereich des Anschlusses einer Nebenleitung an eine Hauptleitung, umfassend ein fahrbares Trägerelement und eine selbstarretierende Schalung, die miteinander mittels eines Magnetfeldes sicher miteinander verbindbar sind.

Es sind Vorrichtungen und Verfahren für eine solche Sanierung im Stand der Technik bekannt, bei denen ein selbstfahrender oder mit Seilen im Kanal fahrbarer Kanalsanierungsroboter eine Tragvorrichtung für verschiedene Sanierungswerkzeuge umfasst. Diese Werkzeuge, insbesondere eine Spachteleinrichtung, lassen sich nach Positionierung des Roboters im Schadstellenbereich von außerhalb des Kanals aus steuern.

Für die Reparatur von Schadstellen im Bereich des Anschlusses einer Nebenleitung an eine Hauptleitung sind zudem Vorrichtungen im Stand der Technik beschrieben, bei denen der im Hauptkanal anordnenbare Kanalsanierungsroboter eine Tragvorrichtung für eine im Bereich des Nebenkanalanschlusses an die Wandung des Hauptleitung anlegbare Abdeckung bildet.

Die Abdeckung trägt ihrerseits einen in die Nebenleitung einbringbaren, aufweitbaren Dehnkörper, auch Blase genannt. Im aufgeweiteten Zustand liegt dieser Dehnkörper gegen die Wandung der Nebenleitung an und bildet dann zusammen mit der Abdeckung eine Schalung aus, die eine in diese Schalung eingebrachte viskose Dichtmasse vor einem Aushärten derselben stützt. Nach dem Aushärten wird der Dehnkörper kontrahiert und die Abdeckung entfernt und die Dichtmasse bildet die wiederhergestellten, vorher schadhaften Kanalwandungsbereiche. Ein solche Abdeckung gemäß dem Stand der Technik, auch als Schalungsmanschette bezeichnet, ist in einer Ausführungsform grundsätzlich aus WO 1995027167A1 vorbekannt.

Grundsätzlich besteht die Möglichkeit, die von den Vorrichtungen der beschriebenen Art verwendete, viskose aushärtbare Dichtmasse vom äußeren aus über Schläuche oder andere bewegliche Leitungen dem Kanalsanierungsgerät zuzuführen.

Aus DE 36 18 963 ist eine mit Abdeckung und Dehnkörper ausgestattete Kanalsanierungsvorrichtung bekannt, bei der die Sanierungsmasse um den zunächst schlaffen Dehnkörper herum angeordnet und dann zusammen mit diesem in den Nebenkanal eingefahren wird. Beim Aufweiten des Dehnkörpers drückt dieser die Sanierungsmasse radial gegen die schadhafte Kanalwand.

Dabei ist zu beachten, dass das Anbringen der Schalung mehrere Arbeitsschritte umfasst. Zunächst wird das Abdeckelement in der Hauptleitung expandiert, dann der Dehnkörper durch eine Aussparung in die Nebenleitung eingeführt und ebenfalls expandiert, indem ein kleines nadelförmiges Verbindungselement in das Ventil des Dehnkörpers eingeführt werden muss. Anschließend muss ein Verschluss in der Abdeckung geöffnet werden, und dort der Auslass einer Leitung zum Transport der Sanierungsmasse in den Zwischenraum zwischen der durch die Abdeckung und den Dehnkörper gebildeten Schalung und die Bestandswände gepresst werden.

Jeder dieser Arbeitsschritte ist potenziell fehleranfällig und muss ggf. mehrfach wiederholt werden, so dass die Tropfzeit mit hohen Sicherheiten für solche Bedienfehler ausgelegt werden muss. Dementsprechend lang ist die Aushärtezeit der Sanierungsmasse, bis die Schalung wieder entfernt werden kann.

Es ist jedoch wünschenswert, den Zeitraum, in dem die Schalung in der Leitung verbleiben muss, zu minimieren. Dies reduziert Arbeitskosten sowie die Kosten für das Bereithalten des Kanalsanierungsroboters.

Besonders aufwendig gestaltet sich dabei das Setzen des Dehnkörpers. Um den Dehnkörper zu expandieren, muss dieser mit Druckluft beaufschlagt werden. Das Ventil des Dehnkörpers ist jedoch klein und muss präzise mittels eines Auslegers angesteuert werden, in dem ein meist nadelförmiges Verbindungselement in dieses eingeführt wird. Dies Verbinden ist für einen Benutzer, der den Ausleger mittels Kamerabildern steuert, schwierig und benötigt oftmals mehrere Versuche. Im ungünstigsten Fall wird dabei sogar der Dehnkörper zerstört. Gerade auch durch dieses zeitaufwendige Expandieren des Dehnkörpers muss eine lange Topfzeit der Sanierungsmasse gewählt werden. Während die Fahrtzeit der Vorrichtung bis zu der zu sanierenden Stelle relativ genau bestimmt werden kann, ist die Anzahl der Versuche, bis der Dehnkörper expandiert ist, schwer vorherzubestimmen und entsprechende Sicherheitszeiträume müssen eingeplant werden.

Aus WO2021/063450A1 ist eine Vorrichtung zum Sanieren von schadhaften Leitungswandungen im Bereich des Anschlusses einer Nebenleitung an eine Hauptleitung bekannt, umfassend ein Abdeckelement und ein aufweitbarer Dehnkörper, und wobei der aufweitbare Dehnkörper im nicht aufgeweiteten Zustand mindestens abschnittsweise in einer oder durch eine erste Aussparung in dem Abdeckelement in der Nebenleitung positioniert ist und im aufgeweiteten Zustand an der Wandung der Nebenleitung anliegt, so dass das Abdeckelement und der Dehnkörper zusammen eine Schalung ausbilden, dadurch gekennzeichnet, dass der Dehnkörper im aufgeweiteten Zustand fest an der Wandung der Nebenleitung anliegt, so dass der Dehnkörper sich selbst und die Schalung arretiert.

Aus dem Stand der Technik sind Vorrichtungen zum Sanieren von schadhaften Leitungswandungen im Bereich des Anschlusses einer Nebenleitung an eine Hauptleitung bekannt, umfassend ein fahrbares Trägerelement, wobei auf dem Trägerelement ein Abdeckelement und ein aufweitbarer Dehnkörper angeordnet ist.

Ebenfalls nachteilig an den im Stand der Technik aufgeführten Ausführungsformen ist jedoch, dass der Dehnkörper und die Schalung oftmals mit dem Ausleger dem fahrbaren Trägerelement verbunden ist und somit das fahrbare Trägerelement am Ort der Aushärtung erbleiben muss.

Alternativ sind Lösungen im Stand der Technik bekannt, bei denen die selbstarretierenden Schalung lösbar mit dem fahrbaren Trägerelement verbunden ist. In diesem Fall kann die selbstarretierende Schalung in ihrer Position verbleiben und das fahrbare Trägerelement beispielsweise weitere Schalungen setzten, bis die erste Schalung wieder entfernt werden kann.

Aufgrund dieser Vorteile setzt sich die lösbare Verbindung von Trägerelement und Schalung immer weiter durch. Problematisch an den bekannten Lösung zum Verbindung und Lösen von Trägerelement und Schalung ist jedoch, dass diese aufwendig sind und eine hohe Präzision voraussetzen. Dies ist - wie bereits mit Bezug auf das Setzen des Dehnkörpers ausgeführt - kostenintensiv und unerwünscht.

Daher lag die Aufgabe der vorliegenden Erfindung darin, die Nachteile des Standes der Technik zu überwinden und insbesondere eine Vorrichtung zu liefern, die eine schnellere und zuverlässigere Sanierung von Leitungen ermöglicht, wobei insbesondere das Anbringen und Entfernen von Schalung und Dehnkörper vereinfacht werden soll.

Die Aufgabe wird gelöst durch eine Vorrichtung zum Sanieren von schadhaften Leitungswandungen im Bereich des Anschlusses einer Nebenleitung an eine Hauptleitung, umfassend ein fahrbares Trägerelement und eine selbstarretierende Schalung, wobei die selbstarretierende Schalung mindestens eine Kontaktplatte und das fahrbare Trägerelement einen Ausleger mit mindestens einem Elektromagneten umfasst, wobei
in einem Transportzustand die selbstarretierende Schalung mit dem Ausleger des Trägerelements verbunden ist, indem das magnetische Feld des mindestens einen Elektromagneten auf die mindestens eine Kontaktplatte der selbstarretierenden Schalung wirkt,
und in einem Montagezustand die selbstarretierende Schalung im Bereich des Anschlusses einer Nebenleitung an eine Hauptleitung fest mit der oder den Leitungen verbunden ist, wobei das magnetische Feld des Elektromagneten nicht auf die Kontaktplatte wirkt und das fahrbare Trägerelement nicht mehr mit der selbstarretierenden Schalung verbunden ist.

Unter einem Trägerelement soll insbesondere ein Element verstanden werden, dass auf Rädern oder Ketten verfahrbar ist und über einen integrierten Antrieb verfügt. Alternativ zu einem integrierten Antrieb kann das Trägerelement auch mittels Seilen, Kabeln und dergleichen in der Leitung verfahren werden.

Unter einem Ausleger soll insbesondere ein Element verstanden werden, das mindestens in eine, insbesondere zwei und bevorzugt in drei Raumachsen bewegbar ist. Dabei ist insbesondere mindestens ein Gelenk umfasst.

Ein Elektromagnet soll dabei insbesondere ausgelegt und eingerichtet seine ferromagnetischen Gegenstände anzuziehen und zu halten, wobei die Steuerung des Haltens insbesondere durch den Stromfluss gesteuert und geregelt werden kann, was das Setzen und Entfernen der selbstarretierenden Schalung ermöglicht.

Auch kann es vorteilhaft sei, wenn die Vorrichtung bevorzugt einen weiteren und insbesondere mehrere weitere Elektromagneten und Kontaktplatten umfasst, wobei es besonders vorteilhaft ist, wenn diese auf dem Ausleger und der selbstarretierende Schalung so angeordnet sind, dass diese gleichmäßig miteinander verbunden werden können.

Dabei kann es ebenso vorteilhaft sein, wenn die Elektromagneten einzeln steuerbar und somit einzeln zu- und abschaltbar sind.

Unter einem Transportzustand soll insbesondere ein Zustand verstanden werden, in welchem selbstarretierende Schalung mit dem Ausleger des Trägerelements verbunden ist, wobei das magnetische Feld der Elektromagneten auf die Kontaktplatten wirkt, so dass die selbstarretierende Schalung sicher mit dem Ausleger verbunden ist und durch das Trägerelement zu oder weg von einer zu sanierenden Anschlussstelle transportiert werden kann.

Unter einem Montagezustand soll insbesondere ein Zustand verstanden werden, in welchem die selbstarretierende Schalung im Bereich des Anschlusses einer Nebenleitung an eine Hauptleitung angebracht ist, wobei das magnetische Feld der Elektromagneten auf die Kontaktplatten nicht wirkt. Dabei kann das Trägerelement insbesondere nicht in räumlicher Nähe zur Anschlussstelle und der selbstarretierenden Schalung sein, sondern beispielsweise weitere Schalungen setzen.

Ebenso umfasst ist einen Übergangszustand vom Transportzustand in den Montagezustand, welcher insbesondere dadurch gekennzeichnet ist, dass selbstarretierende Schalung im Bereich des Anschlusses einer Nebenleitung an eine Hauptleitung angebracht ist und das magnetische Feld der Elektromagneten auf die Kontaktplatten wirkt. Dieser Übergangszustand geht dann durch Abschalten der Elektromagneten in den Montagezustand über.

Dabei kann erfindungsgemäß vorgesehen, dass die selbstarretierende Schalung ein Abdeckelement und einen aufweitbarer Dehnkörper umfasst.

Dabei kann weiterhin erfindungsgemäß vorgesehen, dass das Abdeckelement in einem Transportzustand einen geringeren Innendurchmesser aufweist als in einem Betriebszustand, und insbesondere in Form einer Schalungs-Manschette ausgebildet ist.

Die Ausbildung des Abdeckelement mit unterschiedlichen Innendurchmessern ist vorteilhaft und aus dem Stand der Technik bekannt. Insbesondere eine Ausbildung des Abdeckelements in Form einer Schalungsmanschette hat den Vorteil, dass sich das zylinderförmige Abdeckelement sehr gut in der Leitung transportieren lässt und im Betriebszustand sehr sicher fixiert ist, da es sich innerhalb der Hauptleitung selbstständig ausrichtet und durch den Anpressdruck in der gewünschten Position arretieren lässt, ohne dass weitere Hilfsmittel zum Einsatz kommen müssen.

Dabei kann erfindungsgemäß vorgesehen, dass der aufweitbare Dehnkörper im nicht aufgeweiteten Zustand mindestens abschnittsweise in einer oder durch eine erste Aussparung in dem Abdeckelement in der Nebenleitung positioniert ist und im aufgeweiteten Zustand an der Wandung der Nebenleitung anliegt, so dass das Abdeckelement und der Dehnkörper zusammen eine Schalung ausbilden, dadurch gekennzeichnet, dass der Dehnkörper im aufgeweiteten Zustand fest an der Wandung der Nebenleitung anliegt, so dass der Dehnkörper sich selbst und die Schalung arretiert.

Unter einem Dehnkörper soll ein größenveränderbares Element verstanden werden, welches meist auf Kunststoff oder Gummi basiert und prinzipiell einem Ballon ähnelt. Des Weiteren umfasst der Dehnkörper insbesondere ein Ventil, um ein Expandieren mit Druckluft zu ermöglichen sowie bei einem Öffnen des Ventils ein anschließendes Kontrahieren.

Der Dehnköper wird dabei in einer ersten Aussparung in dem Abdeckelement angeordnet und expandiert in die Nebenleitung. Gemeinsam bilden das Abdeckelement und der Dehnkörper eine Schalung aus, die, zumindest ungefähr, dem Innendurchmesser der Leitungen entspricht.

Dabei kann erfindungsgemäß vorgesehen, dass das Abdeckelement eine zweite Aussparung aufweist, durch die mittels eines Transportmittels von einer Aufbewahrungseinrichtung eine viskose, aushärtbare Sanierungsmasse in den Raum zwischen der Schalung und der zu der Schalung benachbarten Wandungen der Haupt- und Nebenleitung einbringbar ist.

Gemäß einer Ausführungsform der vorliegenden Erfindung ist die viskose, aushärtbare Sanierungsmasse ein Expoxydharz ist und/oder das die Sanierungsmasse aus einem Ein- oder Zwei-Komponentharz besteht und/oder das für ein Härten des Expoxydharzes eine Temperatur von mindestens 100°, 90°, 80°, 70°, 60°, 50°, 40°, 30°, 20° oder 10°C notwendig ist.

Zweikomponentenharze haben sich als besonders vorteilhafte Dichtmassen erwiesen. Auch kann das Wählen eines Ein- oder Zweikomponentenharzes mit einer Aushärtung bei einer hohen Temperatur vorteilhaft sein, da dann nur eine Aushärtung erfolgt, wenn die erfindungsgemäße Heizeinrichtung in Betrieb ist. Somit kann eine beliebige Topfzeit ermöglicht werden.

Auch kann es gemäß einer Ausführungsform der vorliegenden Erfindung vorgesehen sein, dass die zweite Aussparung mittels eines Verschlusselements verschlossen ist, wobei insbesondere das Verschlusselement mittels des Trägerelements und/oder eines weiteren Trägerelements öffnenbar und schließbar ist, wobei das weitere Trägerelement in mindestens einer, insbesondere zwei, vorzugsweise drei Raumachsen beweglich gelagert ist.

Ein solches Verschlusselement ist vorteilhaft, da somit verhindert wird, dass die noch nicht ausgehärtete Dichtmasse durch die zwar kleine, aber vorhanden zweite Aussparung ausdringt.

Dabei kann erfindungsgemäß vorgesehen, dass die selbstarretierende Schalung ein Befestigungselement umfasst, das an dem der Nebenleitung entgegengesetzt angeordneten Ende des Dehnkörpers oder benachbart zu diesem Ende angeordnet ist, wobei das Befestigungselement mit dem Dehnkörper und mit dem Abdeckelement verbunden ist.

Dabei kann erfindungsgemäß vorgesehen sein, dass ein weiterer Dehnkörper zwischen dem Befestigungselement und dem Abdeckelement angeordnet ist, wobei ein Expandieren des Weiteren Dehnkörpers das Abdeckelement an die Wandung der Leitung presst.

Unter einem Dehnkörper soll ein größenveränderbares Element verstanden werden, welches meist auf Kunststoff oder Gummi basiert und prinzipiell einem Ballon ähnelt. Des Weiteren umfasst der Dehnkörper insbesondere ein Ventil, um ein Expandieren mit Druckluft zu ermöglichen sowie bei einem Öffnen des Ventils ein anschließendes Kontrahieren.

Dabei kann erfindungsgemäß vorgesehen sein, dass der weitere Dehnkörper zweigeteilt ausgebildet ist und jeweils ein weiterer Dehnkörper an gegenüberliegenden vertikalen Enden des ersten Dehnkörpers angeordnet ist.

Dabei kann erfindungsgemäß vorgesehen sein, dass eine Heizeinrichtung umfasst ist, die mit dem aufweitbaren Dehnkörper und/oder dem Abdeckelement in Wirkverbindung steht.

Durch eine erfindungsgemäße Heizeinrichtung kann dabei die Aushärtedauer der Sanierungsmasse deutlich reduziert werden. Erfindungsgemäß kann dabei die Heizeinrichtung in das Abdeckelement und/oder in das Transportmittel mindestens im Bereich der zweiten Aussparung integriert werden oder mit diesem Bereich in Wirkverbindung stehen.

Somit kann die Sanierungsmasse vorzugsweise bereits in dem Transportmittel, meist einem Schlauch, vorgeheizt werden. Alternativ oder zusätzlich kann eine Heizeinrichtung auch in die Schalung integriert werden und Heizleistung während des gesamten Aushärtevorgangs zur Beschleunigung desselben bereitstellen.

Gemäß einer Ausführungsform kann vorgesehen sein, dass die Mikrowellenerzeugungseinrichtung ein Magnetron, das Mikrowellen erzeugt und eine Strahlungsantenne, zum Strahlen der durch das Magnetron erzeugten Mikrowellen in den Raum zwischen der Schalung und der zu der Schalung benachbarten Wandungen der Haupt- und Nebenleitung und/oder in die Aufbewahrungseinrichtung umfasst, wobei die Strahlungsantenne vorzugsweise durch das Abdeckelement ausgebildet, von diesem umfasst oder mit diesem in Wirkverbindung steht.

Es hat sich als besonders vorteilhaft erwiesen, dass ein Heizen der Sanierungsmasse mittels Mikrowellenstrahlung erfolgt. Dabei kann es besonders vorteilhaft sein, wenn die Sanierungsmasse nach dem Einbringen in den Raum zwischen der Schalung und der zu der Schalung benachbarten Wandungen der Haupt- und Nebenleitung erwärmt wird, wobei als Strahlungsantenne auf das Abdeckelement zurückgegriffen wird. Es kann dabei vorteilhaft sein, dass das Abdeckelement selbst die Strahlungsantenne ausbildet, oder dass die Strahlungsantenne in das Abdeckelement mindestens teilweise integrierte ist. Ebenfalls alternativ bevorzugt kann die Strahlungsantenne mit dem Abdeckelement in Wirkverbindung stehen. Dabei kann insbesondere vorgesehen sein, dass die Heizeinrichtung in Form eines Heizschlauchs, einer Strahlungsquelle, insbesondere einer Infrarot-Heizvorrichtung und/oder einer Mikrowellenerzeugungseinrichtung, und/oder einer Elektroheizung ausgebildet ist.

Unter einer Heizeinrichtung soll prinzipiell jede Wärmeerzeugungsvorrichtung verstanden werden, deren Funktion primär in der Erzeugung von Bereitstellung von Wärmeenergie besteht. Nicht als Heizeinrichtung sind im Sinne der Erfindung dabei Vorrichtungen, die sogenannte Abwärme produzieren, wie beispielsweise Lampen, Elektromotoren und dergleichen.

Dabei kann erfindungsgemäß vorgesehen sein, dass die Sanierungsmasse aus der Aufbewahrungseinrichtung durch eine Druckbeaufschlagung im Inneren der Aufbewahrungseinrichtung und/oder durch eine Pumpeinrichtung über das Transportmittel in den Raum hinter der Schalung einbringbar ist.

Die Sanierungsmasse muss mit einem jeweils individuellen Minimaldruck in den durch die Schalung definierten Hohlraum eingepresst werden. Des Weiteren darf der Druck jedoch nicht so hoch werden, dass die Schalung ihrer abdichtenden Funktion nicht mehr nachkommen kann. Um einen solchen definierten Druck einstellen zu können, haben sich Pumpeinrichtungen, wie z.B. peristaltische Pumpen oder Kolbenpumpen als besonders geeignet erwiesen. Alternativ kann es jedoch auch möglich sein, mittels einer Druckbeaufschlagung innerhalb der Aufbewahrungseinrichtung ein Fluss der Sanierungsmasse in den besagten Hohlraum zu ermöglichen.

Gemäß einer Ausführungsform der vorliegenden Erfindung kann es vorteilhaft sein, dass das Abdeckelement in einem Transportzustand einen geringeren Innendurchmesser aufweist als in einem Betriebszustand, und insbesondere in Form einer Schalungs-Manschette ausgebildet ist.

Die Ausbildung des Abdeckelement mit unterschiedlichen Innendurchmessern ist vorteilhaft und aus dem Stand der Technik bekannt. Insbesondere eine Ausbildung des Abdeckelements in Form einer Schalungsmanschette hat den Vorteil, dass sich das zylinderförmige Abdeckelement sehr gut in der Leitung transportieren lässt und im Betriebszustand sehr sicher fixiert ist, da es sich innerhalb der Hauptleitung selbstständig ausrichtet und durch den Anpressdruck in der gewünschten Position arretieren lässt, ohne dass weitere Hilfsmittel zum Einsatz kommen müssen.

Dabei kann erfindungsgemäß vorgesehen sein, dass die Kontaktplatten aus einem ferromagnetischen Material, insbesondere Stahl bestehen.

Unter ferromagnetischem Material wird dabei jedes Material verstanden, das geeignet ist von dem in der Erfindung vorgesehenen Elektromagnet angezogen zu werden.

Dabei kann erfindungsgemäß vorgesehen sein, dass dadurch gekennzeichnet, dass der Ausleger mittels mindestens eines Aktuators, insbesondere eines Elektromotors, in der mindestens einen Raumachse, insbesondere in zwei, bevorzugt in drei Raumachsen bewegbar ist.

Eine Bewegung des Auslegers mittels eines Aktuators, beispielsweise eines Elektromotors oder eines hydraulischen oder pneumatischen Zylinders ist besonders vorteilhaft, da der Ausleger somit in Form eines Roboterarms bereitgestellt ist, der von einem Benutzer ferngesteuert werden kann.

Hierbei kann es besonders bevorzugt sein, dass eine Kamera umfasst ist, die auf dem Trägerelement angeordnet ist, wobei die Kamera benachbart zu dem Ausleger angeordnet ist.

Weiterhin liefert die Erfindung ein Verfahren zum Sanieren von schadhaften Leitungswandungen im Bereich des Anschlusses einer Nebenleitung an eine Hauptleitung, umfassend die folgenden Schritte, insbesondere in dieser Reihenfolge:
a) Bereitstellen einer Vorrichtung nach einem der vorangehenden Ansprüche;
b) Bewegen des fahrbaren Trägerelements und der selbstarretierenden Schalung, die über das magnetische Feld des Elektromagneten miteinander lösbar verbundenen sind, zu einer zu sanierenden Anschlussstelle, wobei sich das Trägerelement und die selbstarretierende Schalung im Transportzustand befinden;
c) Teilweises Anordnen der selbstarretierenden Schalung im Transportzustand im Seitenzulauf;
d) Expandieren des Dehnkörpers zum Arretieren der selbstarretierenden Schalung im Transportzustand;
e) Lösen der selbstarretierenden Schalung vom Ausleger der fahrbaren Trägereinrichtung;
f) und Bewegen des fahrbaren Trägerelements von der zu sanierenden Anschlussstelle und der selbstarretierenden Schalung im Montagezustand weg.

Erfindungsgemäß kann weiterhin der folgende Schritt umfasst sein:
g) Einbringen einer Sanierungsmasse zwischen das Abdeckelement, die Blase und die Wandung;

Erfindungsgemäß können weiterhin, insbesondere vor Schritt d), der Schritte umfasst sein:
h) Expandieren eines weiteren Dehnkörpers zwischen dem Befestigungselement und dem Abdeckelement nach Schritt c) und vor Schritt e) zum Anpressen des Abdeckelements an die Wandung der zu sanierenden Leitung;

Erfindungsgemäß können weiterhin insbesondere nach Schritt g), die Schritte umfasst sein:
j) Bewegen der fahrbaren Trägereinrichtung zu einer zu sanierenden Anschlussstelle;
k) Verbinden der selbstarretierenden Schalung im Montagezustand mit dem Ausleger der fahrbaren Trägereinrichtung über das magnetische Feld des Elektromagneten;
l) und wegbewegen der fahrbaren Trägerelements und der über das magnetische Feld des Elektromagneten verbundenen selbstarretierenden Schalung im Transportzustand von der zu sanierenden Anschlussstelle. Schließlich liefert die Erfindung eine Verwendung einer erfindungsgemäßen Vorrichtung zur Sanierung von schadhaften Leitungswandungen im Bereich des Anschlusses einer Nebenleitung an eine Hauptleitung.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert werden, ohne dadurch die Erfindung zu beschränken.

Dabei zeigt:
Fig. 1: eine schematische Schnittansicht einer erfindungsgemäßen Vorrichtung mit magnetischer Verbindung zwischen Trägerelement und Schalung;
Fig. 2a bis 2c.: eine Ausführungsform eines erfindungsgemäßen Verfahrens mit einer erfindungsgemäßen Vorrichtung gemäß Figur 1.

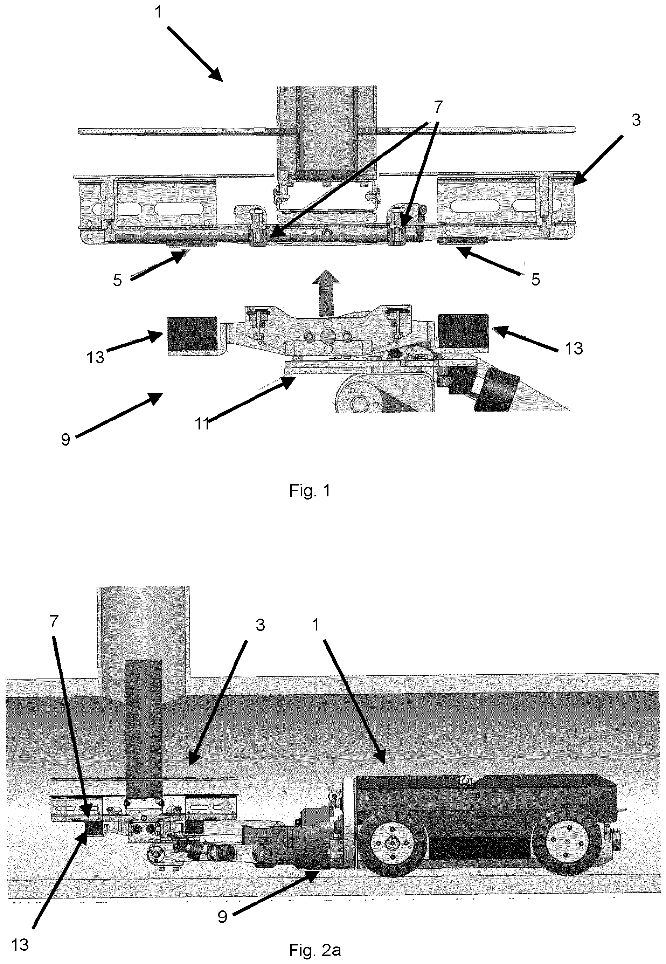

In Figur 1 ist eine schematische Schnittansicht einer erfindungsgemäßen Vorrichtung 1 mit magnetischer Verbindung zwischen Trägerelement und Schalung gezeigt. Die Vorrichtung umfasst eine selbstarretierende Schalung 3 mit zwei ferromagnetischen Elementen 5, die auf der Unterseite der Schalung 3 angeordnet sind.

Des weiteren umfasst die Vorrichtung 1 ein fahrbares Trägerelement 9, welches nur abschnittsweise in Figur 1 dargestellt ist. Das Trägerelement 9 umfasst dabei einen Ausleger 11, der in mindestens einer, in der dargestellten Form in zwei Raumachsen beweglich auf einer Grundplatte des Trägerelements 9 angeordnet ist. An dem Ende des Auslegers 11 sind zwei Elektromagnete 13 angeordnet, die mit den ferromagnetischen Elementen 5 interagieren.

Die zwei Elektromagnete 13 sind dabei mit dem Ausleger 11 fest verbunden. Bei dem Anlegen einer elektrischen Spannung bildet sich ein magnetisches Feld. Hierdurch wird eine feste Verbindung mit den ferromagnetischen Elementen 5 erzeugt, die wiederum fest mit der Schalung 3 verbunden sind.

Die Verbindung zwischen Schalung 3 und Ausleger 11 lässt sich wieder lösen, wenn der elektrische Stromkreis unterbrochen wird und somit kein Magnetfeld mehr anliegt.

Die Figuren 2a bis 2c zeigen eine Ausführungsform eines erfindungsgemäßen Verfahrens mit einer erfindungsgemäßen Vorrichtung 1 gemäß Figur 1. Die Vorrichtung 1 umfasst dabei das fahrbare Trägerelement 9 mit dem Ausleger 11, der beweglich auf einer Grundplatte des Trägerelements 9 angeordnet ist.

An dem Ende des Auslegers 11 sind die zwei Elektromagnete 13 angeordnet, die aktiviert sind, und die mit den ferromagnetischen Elementen 5 der selbstarretierende Schalung 3 verbunden sind. Somit sind die selbstarretierende Schalung 3 und der Ausleger 11 fest miteinander verbunden.

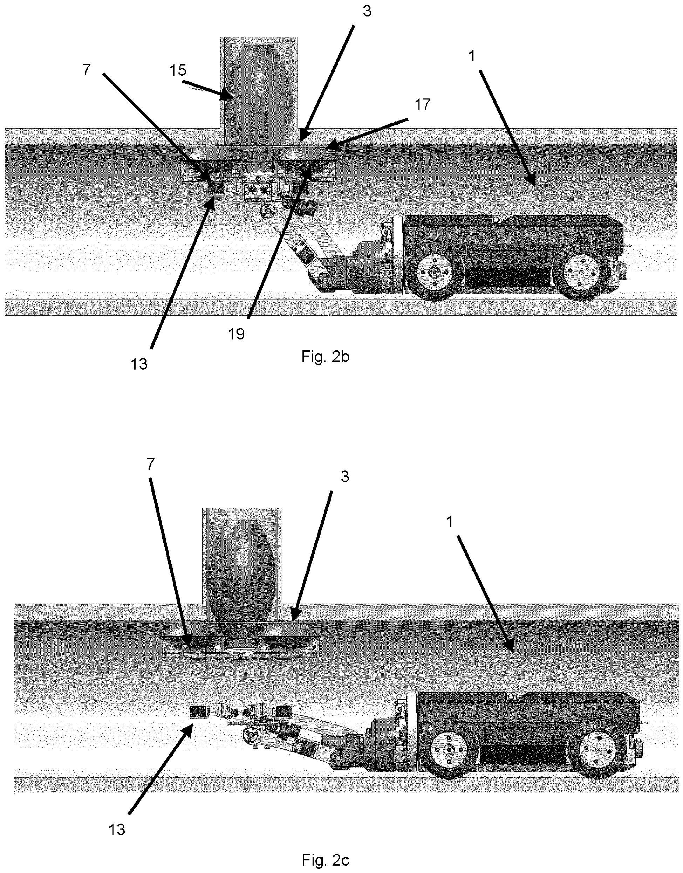

Die Vorrichtung 1 fährt dabei bis zu dem Anschlusspunkt einer Nebenleitung in eine Hauptleitung und der Ausleger 11 bewegt die selbstarretierende Schalung benachbart zu der Nebenleitung wie in Figur 2b gezeigt. Anschließend wird der Dehnkörper 15 expandiert, so dass sich dieser in die Nebenleitung erstreckt und an deren Wandung angepresst wird.

Die selbsarretierende Schalung 3 wird somit von dem Dehnkörper 15 in der Nebenleitung fest arretiert. Nunmehr muss noch ein Abdeckelement 17 zum Verschließen der Nebenleitung an die Innenwandung der Hauptleitung gepresst werden, um einen Formschluss zu bilden. Hierzu dienen zwei weitere Dehnkörper 19, die von einem unteren Ende der selbstarretierenden Schalung 3 gehalten werden und das Abdeckelement 17 in Richtung der Nebenleitung drücken.

Sobald die selbstarretierende Schalung 3 sich selbst in der Nebenleitung arretiert hat, kann die magnetische Verbindung der Elektromagnete 13 mit den ferromagnetischen Elementen 5 gelöst werden, siehe Figur 2c, und die Transportvorrichtung kann andere Aufgaben übernehmen.

Für ein Entfernen der selbstarretierenden Schalung 3 fährt das fahrbare Trägerelement 9 wieder an die Position, der Ausleger 11 wird in Richtung der selbstarretierenden Schalung 3 bewegt und die Elektromagnete 13 werden aktiviert und gehen eine Wirkverbindung mit den ferromagnetischen Elementen 5 der selbstarretierenden Schalung 3 ein.

Somit ist die selbstarretierenden Schalung 3 wieder fest mit dem Ausleger 11 verbunden.

Die in der voranstehenden Beschreibung und den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Vorrichtung zum Sanieren von schadhaften Leitungswandungen im Bereich des Anschlusses einer Nebenleitung an eine Hauptleitung, umfassend ein fahrbares Trägerelement und eine selbstarretierende Schalung, **dadurch gekennzeichnet, dass**
die selbstarretierende Schalung mindestens eine Kontaktplatte und das fahrbare Trägerelement einen Ausleger mit mindestens einem Elektromagneten umfasst, wobei
in einem Transportzustand die selbstarretierende Schalung mit dem Ausleger des Trägerelements verbunden ist, indem das magnetische Feld des mindestens einen Elektromagneten auf die mindestens eine Kontaktplatte der selbstarretierenden Schalung wirkt,
und in einem Montagezustand die selbstarretierende Schalung im Bereich des Anschlusses einer Nebenleitung an eine Hauptleitung fest mit der oder den Leitungen verbunden ist, wobei das magnetische Feld des Elektromagneten nicht auf die Kontaktplatte wirkt und das fahrbare Trägerelement nicht mehr mit der selbstarretierenden Schalung verbunden ist.

2. Vorrichtung nach Anspruch 1, **dadurch gekennzeichnet,**
**dass** die selbstarretierende Schalung ein Abdeckelement und einen aufweitbarer Dehnkörper umfasst.

3. Vorrichtung nach Anspruch 2, **dadurch gekennzeichnet,**
**dass** das Abdeckelement in einem Transportzustand einen geringeren Innendurchmesser aufweist als in einem Betriebszustand, und insbesondere in Form einer Schalungs-Manschette ausgebildet ist.

4. Vorrichtung nach einem der vorhergehenden Ansprüche, **dadurch gekennzeichnet,**
**dass** die mindestens eine Kontaktplatte aus einem ferromagnetischen Material, insbesondere Stahl, besteht.

5. Vorrichtung nach einem der vorhergehenden Ansprüche, **dadurch gekennzeichnet,**
**dass** mindestens zwei Kontaktplatten umfasst sind, die insbesondere an gegenüberliegenden Abschnitten der selbstarretierenden Schalung angeordnete sind und/oder eine Kontaktplatte umfasst ist, die kreissegementförmige ausgebildet ist und die umfasste Blase abschnittsweise oder vollständig von außen umschließt.

6. Vorrichtung nach einem der vorhergehenden Ansprüche, **dadurch gekennzeichnet,**
**dass** das Abdeckelement eine zweite Aussparung aufweist, durch die mittels eines Transportmittels von einer Aufbewahrungseinrichtung eine viskose, aushärtbare Sanierungsmasse in den Raum zwischen der Schalung und der zu der Schalung benachbarten Wandungen der Haupt- und Nebenleitung einbringbar ist, wobei die mindestens eine Kontaktplatte um die zweite Aussparung herum oder neben dieser angeordnet ist.

7. Vorrichtung nach einem der vorhergehenden Ansprüche, **dadurch gekennzeichnet,**
**dass** die selbstarretierende Schalung ein Befestigungselement umfasst, das an dem der Nebenleitung entgegengesetzt angeordneten Ende des Dehnkörpers oder benachbart zu diesem Ende angeordnet ist, wobei das Befestigungselement mit dem Dehnkörper und mit dem Abdeckelement verbunden ist.

8. Vorrichtung nach einem der vorangehenden Ansprüche, **dadurch gekennzeichnet,**
**dass** ein weiterer Dehnkörper zwischen dem Befestigungselement und dem Abdeckelement angeordnet ist, wobei ein Expandieren des Weiteren Dehnkörpers das Abdeckelement an die Wandung der Leitung presst.

9. Verfahren zum Sanieren von schadhaften Leitungswandungen im Bereich des Anschlusses einer Nebenleitung an eine Hauptleitung, umfassend die folgenden Schritte, insbesondere in dieser Reihenfolge:
a) Bereitstellen einer Vorrichtung nach einem der vorangehenden Ansprüche;
b) Bewegen des fahrbaren Trägerelements und der selbstarretierenden Schalung, die über das magnetische Feld des Elektromagneten miteinander lösbar verbundenen sind, zu einer zu sanierenden Anschlussstelle, wobei sich das Trägerelement und die selbstarretierende Schalung im Transportzustand befinden;
c) Teilweises Anordnen der selbstarretierenden Schalung im Transportzustand im Seitenzulauf;
d) Expandieren des Dehnkörpers zum Arretieren der selbstarretierenden Schalung im Transportzustand;
e) Lösen der selbstarretierenden Schalung vom Ausleger der fahrbaren Trägereinrichtung;
f) und Bewegen des fahrbaren Trägerelements von der zu sanierenden Anschlussstelle und der selbstarretierenden Schalung im Montagezustand weg.

10. Verfahren nach Anspruch 9, weiterhin umfassend den folgenden Schritt:
g) Einbringen einer Sanierungsmasse zwischen das Abdeckelement, die Blase und die Wandung.

11. Verfahren nach Anspruch 9 oder 10, weiterhin umfassend, insbesondere vor Schritt d), den Schritt:
h) Expandieren eines weiteren Dehnkörpers zwischen dem Befestigungselement und dem Abdeckelement nach Schritt c) und vor Schritt e) zum Anpressen des Abdeckelements an die Wandung der zu sanierenden Leitung.

12. Verfahren nach einem der Ansprüche 9 bis 11, weiterhin umfassend, insbesondere nach Schritt g), die Schritte:
j) Bewegen der fahrbaren Trägereinrichtung zu einer zu sanierenden Anschlussstelle;
k) Verbinden der selbstarretierenden Schalung im Montagezustand mit dem Ausleger der fahrbaren Trägereinrichtung über das magnetische Feld des Elektromagneten;
l) und Bewegen des fahrbaren Trägerelements und der über das magnetische Feld des Elektromagneten verbundenen selbstarretierenden Schalung im Transportzustand von der zu sanierenden Anschlussstelle weg.

13. Verwendung einer Vorrichtung nach einem der Ansprüche 1 bis 7 für eine Sanierung von schadhaften Leitungswandungen im Bereich des Anschlusses einer Nebenleitung an eine Hauptleitung.
